# FASCICULE DE BREVET EUROPEEN

(11) **EP 2 817 164 B1**
(45) Date de publication et mention de la délivrance du brevet: **30.03.2016**
(21) Numéro de dépôt: 13706594.2
(22) Date de dépôt: 30.01.2013
(51) Int. Cl.: B60K 17/10, B60K 17/16, F03C 1/06, F16H 61/44, B60K 1/00

(54) **MODULE HYDRAULIQUE COMPACT POUR VÉHICULE HYBRIDE HYDRAULIQUE**
KOMPAKTES HYDROMODUL FÜR HYDRAULISCHES HYBRIDFAHRZEUG
COMPACT HYDRAULIC MODULE FOR HYDRAULIC HYBRID VEHICLE

(30) Priorité: 24.02.2012 FR 1251719
(43) Date de publication de la demande: 31.12.2014
(73) Titulaire: Technoboost, 75116 Paris (FR)
(72) Inventeur: GIANNONI, Marc, F-75009 Paris (FR); WASCHEUL, Michael, F-78260 Achères (FR)
(74) Mandataire: Rosenberg, Muriel Sylvie
(86) Numéro de dépôt international: PCT/FR2013/050191
(87) Numéro de publication internationale: WO 2013/124558

(56) Documents cités:
- DE-A1- 19 639 732
- DE-A1-102006 041 861
- FR-A1- 2 112 336
- ACHTEN P: "KEINE KOMPROMISSEN -HYDROSTATISCHER ALLRADANTRIEB FUER AUTOMOBILE UND ANDERE FAHRZEUGE", O + P OLHYDRAULIK UND PNEUMATIK, VEREINIGTE FACHVERLAGE, MAINZ, DE, vol. 52, no. 3, 1 mars 2008 (2008-03-01), pages 92-96, XP001511836, ISSN: 0341-2660

## Description

La présente invention concerne les véhicules hybrides hydrauliques et se rapporte plus particulièrement à un module hydraulique comportant un ou plusieurs moteurs hydrauliques, couplés au différentiel du véhicule pour fournir une puissance motrice aux roues du véhicule.

Un véhicule hybride hydraulique se différencie d'un véhicule hybride électrique par sa source de puissance hydraulique en lieu et place d'une source de puissance d'origine électrique.

Dans un véhicule hybride hydraulique, la boîte de vitesses classique est remplacée ou complétée par un circuit hydraulique fermé.

Une source d'énergie rotative (souvent un moteur thermique voire électrique) entraîne une ou plusieurs pompes hydrauliques volumétriques, de préférence à cylindrée variable, de haute précision.

La pompe hydraulique transforme l'énergie mécanique en énergie hydraulique. Cette énergie est stockée dans un ou des accumulateurs haute pression et elle est ensuite restituée dans le/les moteurs hydrauliques pour propulser le véhicule.

Ainsi, les moteurs hydrauliques transforment l'énergie hydraulique en énergie mécanique.

On connaît plusieurs types d'architecture pour des transmissions hybrides hydrauliques :
- une architecture dite « série »,
- une architecture dite « parallèle » ou
- une architecture dite à « dérivation » (dérivation de puissance mettant en oeuvre un ou plusieurs trains épicycloïdaux).

Avec une transmission de type « parallèle », le système hydraulique vient en général se greffer sur la transmission classique du véhicule, ayant comme rôle d'optimiser le système initial.

Une transmission de type « série », remplace complètement l'architecture de la transmission classique : elle comporte une liaison hydraulique entre le moteur thermique et la roue.

La transmission de type « dérivation » est une architecture mixte permettant d'obtenir une transmission série ou parallèle.

On connait également différents types des pompes ou moteurs hydrauliques couplés à ces différentes architectures de transmission hydrauliques.

La pompe (ou le moteur, en fonction du sens de rotation et de son utilisation) hydraulique, utilisée pour de telles transmissions, est souvent une pompe volumétrique à pistons, notamment des pompes à pistons axiaux en ligne avec un barillet tournant.

L'autre famille de pompe volumétrique utilisée aussi, est celle des pompes à piston radiaux.

Dans une pompe volumétrique, le fluide est isolé dans une chambre à volume variable pour être transféré de la zone d'aspiration (basse pression) vers la zone de refoulement (haute pression).

Ce type de pompe est dit volumétrique car elle véhicule un volume de fluide à chaque tour de fonctionnement : ce volume par tour de fonctionnement est appelé cylindrée.

Généralement, pour les pressions hydrauliques élevées (supérieure à 300 bars), on utilise des pompes à pistons axiaux de type à patins ou à rotules pour les axes brisés ou des pompes à piston radiaux sur galet.

Dans le cadre d'une transmission hydraulique, l'entraînement d'un différentiel avec un moteur hydraulique nécessite l'encombrement d'un différentiel et d'un ou deux moteurs hydrauliques (voir notamment les documents US2005070390 ou WO2005075233).

Le document DE 196 397 32 décrit un module hydraulique compact similaire à celui de la revendication 1 mais qui ne comporte pas un des deux moteurs qui supporte en rotation l'autre.

On greffe ces composants hydrauliques sur le boîtier des différentiels avant (pour les tractions avant), arrière pour les propulsions et avant et/ou arrière et/ou central pour les véhicules tout terrain (4x4). Ces solutions sont technologiquement pratiques mais prennent beaucoup de place dans le compartiment moteur et dans le soubassement arrière et rendent l'implantation difficile.

Un but de la présente invention est de proposer un module hydraulique compact avec une architecture simple, facile à implanter dans un véhicule tout en conservant au maximum l'architecture organique du véhicule que l'on veut hybrider hydrauliquement.

A cet effet, l'invention a pour objet un module hydraulique compact pour fournir une puissance motrice à un véhicule, comprenant un carter dans lequel sont logés un premier et un second moteur hydraulique, montés en opposition, un des deux moteurs étant supporté en rotation par l'autre, chaque moteur comprenant une glace de distribution, un barillet, un plateau et des pistons axiaux sur rotules disposés entre le plateau et le barillet et coopérant avec eux ; lesdits moteurs hydrauliques convertissant l'énergie provenant d'un fluide sous pression, en énergie mécanique sous la forme d'un couple entraînant un différentiel, contenu dans le même carter et dont les arbres de sortie sont couplés aux roues motrices du véhicule ; ledit différentiel comportant un organe de couplage axial apte à accoupler les deux moteurs hydrauliques et configurés pour distribuer le couple vers les arbres de sortie, dans lequel le différentiel est monté en rotation à l'intérieur du moteur hydraulique, et l'axe de rotation du moteur hydraulique est confondu avec l'axe de rotation du différentiel.

L'intérêt principal de cette invention est le gain de place acquis grâce à l'intégration du différentiel à l'intérieur d'un moteur hydraulique avec le principe des pistons axiaux sur rotules.

Le volume sous le capot et/ou sous le plancher du véhicule, est équivalent au volume d'un ou de deux moteurs hydrauliques pour un véhicule hybride hydraulique.

Le boîtier du différentiel sert de corps de pompe du moteur hydraulique. Ce qui permet de gagner un volume sous le capot équivalent au volume du différentiel, tout en conservant le même différentiel classique.

Pour l'hybridation hydraulique série, cette intégration supprime le couple pignon/ couronne de différentiel.

Un module unique servira de différentiel et de pompe hydraulique. Ce qui permettra de gagner de la place sous le capot et aussi de simplifier l'architecture de l'hybride hydraulique.

On utilise les mêmes roulements de paliers de différentiel et d'arbre de support de moteur hydraulique.

La lubrification du différentiel est effectuée par l'huile du moteur hydraulique. (Différentiel de type étanche).

L'implantation des composants du mode hydraulique est totalement symétrique. Le sous-ensemble de droite est identique à celui de gauche.

En inversant le sens des plateaux, pour des moteurs à cylindrée variable, on peut avantageusement utiliser le module hydraulique pour faire de la récupération d'énergie au freinage ou un roulage en marche arrière.

Ces fonctions peuvent également être obtenues en inversant et en contrôlant hydrauliquement les sortie basse pression et haute pression.

Les moteurs hydrauliques deviennent alors des pompes qui rechargent l'accumulateur haute pression.

Le fait d'intégrer le moteur hydraulique et le différentiel dans un même carter d'un module hydraulique permet de conserver au maximum l'architecture organique du véhicule que l'on veut hybrider hydrauliquement.

Ainsi, il n'y aura pas de modification au niveau des portes moyeux des roues, modification souvent nécessaire pour l'intégration du moteur hydraulique et de son réducteur. Un réducteur est indispensable quand on veut réduire les dimensions du moteur et donc, pour la même puissance à passer, on doit augmenter son régime qui devient alors incompatible avec celui des roues du véhicule.

Ce type de montage est néfaste pour le confort de la suspension, car on augmente les masses non-suspendues (poids moteur et réducteur ajouté à celui de la roue).

L'invention sera mieux comprise et d'autres avantages ressortiront à la lecture de la description qui suit, donnée uniquement à titre d'exemple non limitatif et faite en référence aux dessins sur lesquels :

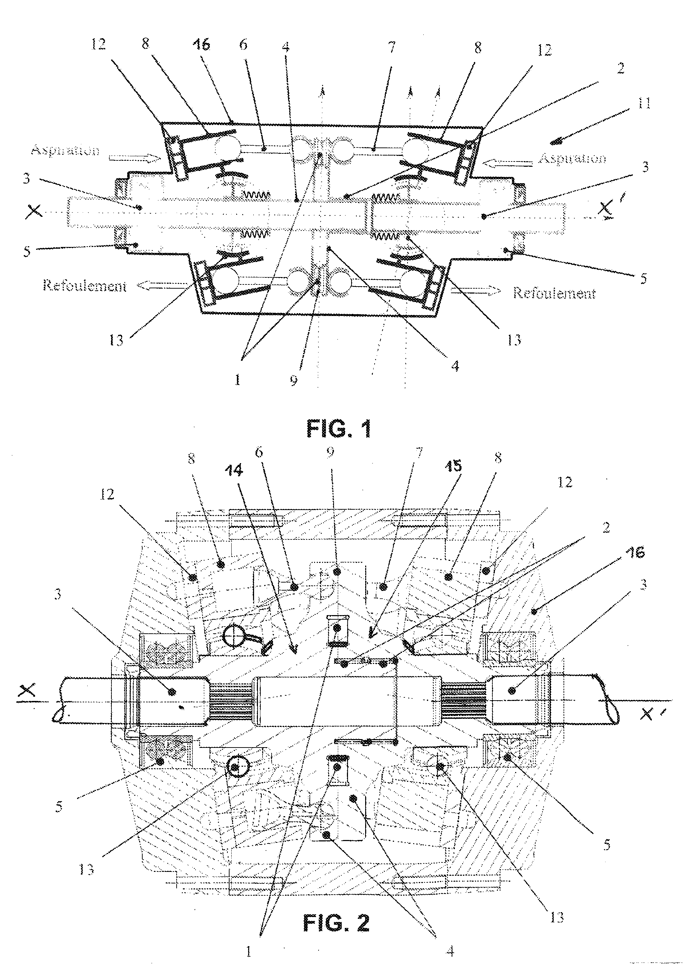

- la figure 1 illustre le schéma fonctionnel, en coupe longitudinale, du module hydraulique selon l'invention ; et
- la figure 2 illustre le dessin en coupe longitudinale du module hydraulique selon l'invention.

Sur les figures, les mêmes références numériques désignent les mêmes composants.

Le module hydraulique 11 selon l'invention comprend un carter 16 dans lequel sont logés un premier et un second moteur hydraulique 14 et 15, respectivement gauche et droit, montés en opposition.

L'un 15 des deux moteurs est supporté librement en rotation par l'autre 14 via des paliers à aiguilles (ou rouleaux) 2.

Les moteurs hydrauliques gauche et droit convertissent l'énergie provenant d'un fluide sous pression, en énergie mécanique sous la forme d'un couple entraînant un différentiel, contenu dans le même carter et dont les arbres de sortie 3 sont couplés aux roues motrices du véhicule (non représentées).

Le différentiel comporte deux boîtiers 4, montés en opposition, présentant chacun un flasque ; chaque flasque définissant le plateau de chacun des premier et second moteurs hydrauliques, centrés sur l'axe XX' de rotation du différentiel.

Il est disposé au centre du carter du module hydraulique ; les plateaux s'étendant parallèlement entre eux, suivant un plan perpendiculaire au plan par lequel passe l'axe de rotation du moteur hydraulique.

Le différentiel est monté en rotation à l'intérieur du moteur hydraulique, et l'axe de rotation XX' du moteur hydraulique est confondu avec l'axe de rotation du différentiel.

Le différentiel comporte un organe de couplage axial 1, notamment une butée à rouleaux (à billes ou à aiguilles), disposée entre, et en contact avec, les faces des flasques qui sont en regard l'une de l'autre.

La butée axiale est apte à coopérer avec les deux moteurs hydrauliques gauche et droit, de manière à distribuer le couple vers les arbres de sortie couplés aux roues.

Les faces des deux flasques, en regard l'une de l'autre, définissent respectivement un plan de roulement pour les rouleaux de la butée axiale. Les rouleaux peuvent être remplacés par des billes ou des aiguilles.

Chaque moteur, gauche et droit, comprend une glace de distribution 12, un barillet 8, un plateau 9 et des pistons axiaux sur rotules 6, 7 disposés entre le plateau et le barillet et coopérant avec eux.

Les premières extrémités des pistons sont couplées au plateau par une liaison rotule et les deuxièmes extrémités sont reçues à coulissement dans les cylindres (ou chemises) du barillet ; le barillet étant plaqué contre la glace de distribution en appui sur la paroi interne du carter du module hydraulique.

La paroi sur laquelle sont plaqués le barillet et la glace de distribution, est inclinée par rapport au plan des plateaux d'un angle déterminé non nul (de l'ordre de 15° à 22°).

Les barillets comportent un nombre déterminé de chemises recevant respectivement les deuxièmes extrémités des pistons ; le fond des chemises communiquant avec la glace de distribution pour le passage du fluide en mode aspiration ou en en mode refoulement du moteur hydraulique.

Chaque boîtier du différentiel comporte une extension cylindrique centrée sur l'axe de rotation du moteur hydraulique, s'étendant suivant une direction opposée au flasque ; ladite extension définissant un arbre du moteur hydraulique comportant un logement interne recevant un des arbres de sortie du différentiel ; l'arbre de sortie étant couplé en rotation avec l'arbre du moteur hydraulique.

Chaque arbre du moteur hydraulique comporte un premier épaulement définissant une première portée cylindrique sur laquelle est monté un pallier 5 permettant de supporter l'arbre du moteur hydraulique à rotation dans le carter du module hydraulique.

Chaque arbre du moteur hydraulique comporte un deuxième épaulement définissant une seconde portée cylindrique, adjacente à la première, sur laquelle est monté un joint homocinétique à billes à centre fixe 13 supportant en rotation le barillet et la glace de distribution.

On retrouve le fonctionnement d'un différentiel classique, mettant en oeuvre une transmission de couple libre entre les deux arbres de roue d'un même essieu.

Deux cas de figures peuvent se présenter :
- Dans un premier cas de figure, les deux arbres de sortie, reliés respectivement aux roues, tournent à la même vitesse : l'effort de rotation est donc réparti équitablement sur chacune des roues.
- Dans un deuxième cas de figure, les deux arbres de sortie ne tournent pas à la même vitesse (cas du virage) : il y alors une rotation différentielle entre les deux moteurs hydrauliques.

Ainsi, la boîte de vitesses classique et la couronne du différentiel et ses composants internes sont remplacées par deux moteurs hydrauliques qui produisent un couple à partir de la pression hydraulique stockée dans les accumulateurs, ou fournis par une pompe, et l'applique directement aux arbres de roue d'un même essieu.

La présente invention est applicable quel que soit le nombre de pistons dans le moteur/pompe hydraulique, le nombre de satellites dans le différentiel et le type de joint homocinétique.

Elle peut s'appliquer également à d'autres technologies de pompes comme les pompes à pistons radiaux.

Elle est applicable pour des différentiels avant et/ou les différentiels arrière pour des véhicules à deux roues motrices et les différentiels centraux pour des véhicules à quatre roues motrices.

Dans une variante, le module hydraulique selon l'invention peut comporter un différentiel avec une couronne au cas où on veut ajouter à la transmission hydrostatique une boîte de vitesses classique avec un ou plusieurs rapports. Dans ce cas, la boîte de vitesses classique transmet le couple au différentiel par la couronne du différentiel et le moteur hydraulique transmet le couple au différentiel par le boîtier du différentiel.

Elle est aussi valable quel que soit le type de pilotage (en pression et/ou en débit) des moteurs hydrauliques.

Le pilotage, en débit et en pression des deux moteurs hydrauliques, de façon séparée permet de bénéficier des configurations différentielles suivantes :
- différentiel libre (comme la plupart des différentiels mécaniques) ;
- différentiel à glissement limité avec un taux de blocage variable et pilotable ;
- différentiel bloqué (type pont bloqué sur véhicule 4x4) ;
- fonction ASR pour amélioration de la motricité ;
- fonction ESP pour les véhicules 4x4.

## Revendications

1. Module hydraulique compact (11) pour fournir une puissance motrice à un véhicule, comprenant un carter (16) dans lequel sont logés un premier (14) et un second (15) moteur hydraulique, montés en opposition, un des deux moteurs étant supporté en rotation par l'autre, chaque moteur comprenant une glace de distribution (12), un barillet (8), un plateau (9) et des pistons axiaux sur rotules (6, 7) disposés entre le plateau et le barillet et coopérant avec eux ; lesdits moteurs hydrauliques convertissant l'énergie provenant d'un fluide sous pression, en énergie mécanique sous la forme d'un couple entraînant un différentiel, contenu dans le même carter et dont les arbres de sortie (3) sont couplés aux roues motrices du véhicule ; ledit différentiel comportant un organe de couplage axial (1) apte à accoupler les deux moteurs hydrauliques et configurés pour distribuer le couple vers les arbres de sortie, dans lequel le différentiel est monté en rotation à l'intérieur du moteur hydraulique, et l'axe de rotation (XX') du moteur hydraulique est confondu avec l'axe de rotation du différentiel.

2. Module hydraulique selon la revendication précédente, **caractérisé en ce que** le différentiel comporte deux boîtiers (4), montés en opposition, présentant chacun un flasque ; chaque flasque définissant le plateau de chacun des premier et second moteurs hydrauliques, centrés sur l'axe de rotation du différentiel ; les deux moteurs hydrauliques étant couplés axialement entre eux par une butée axiale (1) centrée sur l'axe de rotation du différentiel, disposée entre les deux plateaux ; chaque moteur comportant une série de pistons dont les premières extrémités sont couplées au plateau par une liaison rotule et les deuxièmes extrémités sont reçues à coulissement dans le barillet ; le barillet étant plaqué contre la glace de distribution en appui sur la paroi interne du carter du module hydraulique.

3. Module hydraulique selon la revendication précédente, **caractérisé en ce que** chaque barillet comporte des chemises recevant respectivement les deuxièmes extrémités des pistons ; le fond des chemises communiquant avec la glace de distribution pour le passage du fluide en mode aspiration ou en mode refoulement du moteur hydraulique.

4. Module hydraulique selon la revendication précédente, **caractérisé en ce que** le différentiel est disposé au centre du carter du module hydraulique ; les plateaux s'étendant parallèlement entre eux, suivant un plan perpendiculaire au plan par lequel passent l'axe de rotation du moteur hydraulique.

5. Module hydraulique selon la revendication précédente, **caractérisé en ce que** chaque boîtier du différentiel comporte une extension cylindrique centrée sur l'axe de rotation du moteur hydraulique, s'étendant suivant une direction opposée au flasque ; ladite extension définissant un arbre du moteur hydraulique comportant un logement interne recevant un des arbres de sortie du différentiel ; l'arbre de sortie étant couplé en rotation avec l'arbre du moteur hydraulique.

6. Module hydraulique selon la revendication précédente, **caractérisé en ce que** chaque arbre du moteur hydraulique comporte un premier épaulement définissant une première portée cylindrique sur laquelle est monté un pallier (5) permettant de supporter l'arbre du moteur hydraulique à rotation dans le carter du module hydraulique.

7. Module hydraulique selon la revendication précédente, **caractérisé en ce que** la paroi sur laquelle sont plaqués le barillet et la glace de distribution, est inclinée par rapport au plan des plateaux d'un angle déterminé non nul.

8. Module hydraulique selon la revendication précédente, **caractérisé en ce que** chaque arbre du moteur hydraulique comporte un deuxième épaulement définissant une seconde portée cylindrique, adjacente à la première, **en ce qu'**un joint homocinétique (13) est monté sur la deuxième portée cylindrique supportant en rotation le barillet et la glace de distribution.

9. Véhicule hybride hydraulique comportant un module hydraulique compact selon l'une des revendications précédentes.

10. Véhicule hybride hydraulique selon la revendication précédente, **caractérisé en ce que** le véhicule est un véhicule hybride série.

## Patentansprüche

1. Kompaktes hydraulisches Modul (11) zum Liefern einer Antriebsleistung zu einem Fahrzeug, das ein Gehäuse (16) umfasst, in dem ein erster (14) und ein zweiter (15) hydraulischer Motor aufgenommen sind, die in Gegenüberstellung montiert sind, wobei einer dieser Motoren in Drehung von dem anderen getragen wird, wobei jeder Motor eine Verteilerscheibe (12), einen Zylinder (8), eine Platte (9) und axiale Kolben auf Gelenken (6, 7), die zwischen der Platte und dem Zylinder angeordnet sind und mit ihnen zusammenwirken, umfasst, wobei die hydraulischen Motoren die Energie, die von einem Fluid unter Druck stammt, in mechanische Energie in der Form eines Drehmoments umwandeln, das ein Differenzial antreibt, das in demselben Gehäuse enthalten ist und dessen Ausgangswellen (3) mit den Antriebsrädern des Fahrzeugs gekuppelt sind, wobei das Differenzial ein axiales Kupplungsorgan (1) umfasst, das geeignet ist, um die zwei hydraulischen Motoren zu kuppeln, und konfiguriert ist, um das Drehmoment zu den Ausgangswellen zu verteilen, wobei das Differenzial in Drehung im Inneren des hydraulischen Motors montiert ist und die Rotationsachse (XX') des hydraulischen Motors mit der Rotationsachse des Differenzials zusammenfällt.

2. Hydraulisches Modul nach dem vorhergehenden Anspruch, **dadurch gekennzeichnet, dass** das Differenzial zwei Gehäuse (4) umfasst, die in Gegenüberstellung montiert sind, die jeweils einen Flansch aufweisen, wobei jeder Flansch die Platte jedes des ersten und zweiten hydraulischen Motors definiert, die auf der Rotationsachse des Differenzials zentriert sind, wobei die zwei hydraulischen Motoren axial miteinander durch einen axialen Anschlag (1), der auf der Rotationsachse des Differenzials zentriert ist, die zwischen den zwei Platten angeordnet ist, gekuppelt sind, wobei jeder Motor eine Reihe von Kolben umfasst, deren erste Enden mit der Platte durch eine Gelenkverbindung gekuppelt sind, und die zweiten Enden gleitend in dem Zylinder aufgenommen sind, wobei der Zylinder gegen die Verteilerplatte in Auflage auf der inneren Wand des Gehäuses des hydraulischen Moduls angedrückt ist.

3. Hydraulisches Modul nach dem vorhergehenden Anspruch, **dadurch gekennzeichnet, dass** jeder Zylinder Mäntel aufweist, die jeweils die zweiten Enden der Kolben aufnehmen, wobei der Grund der Mäntel mit der Verteilerscheibe für das Durchgehen des Fluids im Ansaugmodus oder im Fördermodus des hydraulischen Motors kommuniziert.

4. Hydraulisches Modul nach dem vorhergehenden Anspruch, **dadurch gekennzeichnet, dass** das Differenzial in der Mitte des Gehäuses des hydraulischen Moduls angeordnet ist, wobei sich die Platten parallel zueinander entlang einer Ebene senkrecht zu der Ebene, durch die die Rotationsachse des hydraulischen Motors durchgeht, erstrecken.

5. Hydraulisches Modul nach dem vorhergehenden Anspruch, **dadurch gekennzeichnet, dass** jedes Gehäuse des Differenzials eine zylindrische Erweiterung umfasst, die auf der Rotationsachse des hydraulischen Motors zentriert ist, die sich entlang einer Richtung entgegengesetzt zu dem Flansch erstreckt, wobei die Erweiterung eine Welle des hydraulischen Motors definiert, die eine innere Aufnahme umfasst, die eine der Ausgangswellen des Differenzials aufnimmt, wobei die Ausgangswelle in Drehung mit der Welle des hydraulischen Motors gekuppelt ist.

6. Hydraulisches Modul nach dem vorhergehenden Anspruch, **dadurch gekennzeichnet, dass** jede Welle des hydraulischen Motors einen ersten Ansatz umfasst, der eine erste zylindrische Auflage definiert, auf die ein Lager (5) montiert ist, das es erlaubt, die Welle des hydraulischen Motors in Drehung in dem Gehäuse des hydraulischen Moduls zu tragen.

7. Hydraulisches Modul nach dem vorhergehenden Anspruch, **dadurch gekennzeichnet, dass** die Wand, auf die der Zylinder und die Verteilerscheibe angedrückt sind, in Bezug zu der Ebene der Platten um einen bestimmten Winkel, der nicht gleich null ist, geneigt ist.

8. Hydraulisches Modul nach dem vorhergehenden Anspruch, **dadurch gekennzeichnet, dass** jede Welle des hydraulischen Motors einen zweiten Ansatz umfasst, der eine zweite zylindrische Auflage definiert, die neben der ersten liegt, dass ein homogenetisches Gelenk (13) auf die zweite zylindrische Auflage montiert ist, das in Drehung den Zylinder und die Verteilerplatte trägt.

9. Hydraulisches Hybridfahrzeug, das ein kompaktes hydraulisches Modul nach einem der vorhergehenden Ansprüche umfasst.

10. Hydraulisches Hybridfahrzeug nach dem vorhergehenden Anspruch, **dadurch gekennzeichnet, dass** das Fahrzeug ein Serienhybridfahrzeuge ist.

## Claims

1. A compact hydraulic module (11) for providing driving power to a vehicle, including a casing (16) in which a first (14) and second (15) hydraulic engine, mounted opposite each other, are accommodated, one of the two engines being rotatably supported by the other, each engine including a valve plate (12), a cylinder (8), a plate (9), and axial pistons on knuckles (6, 7) which are arranged between the plate and the cylinder and which engage therewith; said hydraulic engines converting the energy from a pressurized fluid into mechanical energy in the form of torque driving a differential, which is contained in the same housing and the output shafts (3) of which are coupled to the drive wheels of the vehicle; said differential comprising an axial coupling member (1) which is capable of coupling the hydraulic engines together and which is configured so as to distribute the torque to the output shafts, wherein the differential is rotatably mounted inside the hydraulic engine, and the rotational axis (XX') of the hydraulic engine coincides with the rotational axis of the differential.

2. The hydraulic module according to the preceding claim, **characterized in that** the differential comprises two cases (4), mounted in opposition, each having a flange; each flange defining the plate of each of the first and second hydraulic engines, centred on the rotational axis of the differential; the two hydraulic engines being coupled axially with respect to one another by an axial stop (1) centred on the rotational axis of the differential, disposed between the two plates; each engine comprising a series of pistons, the first ends of which are coupled to the plate by a swivel connection and the second ends are slidably received in the cylinder; the cylinder being arranged flat against the valve plate resting on the internal wall of the casing of the hydraulic module.

3. The hydraulic module according to the preceding claim, **characterized in that** each cylinder comprises sleeves receiving respectively the second ends of the pistons; the bottom of the sleeves communicating with the valve plate for the passage of the fluid in aspiration mode or in discharge mode of the hydraulic engine.

4. The hydraulic module according to the preceding claim, **characterized in that** the differential is disposed in the centre of the casing of the hydraulic module; the plates extending parallel with respect to one another, along a plane perpendicular to the plane by which the rotational axis of the hydraulic engine passes.

5. The hydraulic module according to the preceding claim, **characterized in that** each case of the differential comprises a cylindrical extension centred on the rotational axis of the hydraulic engine, extending along a direction opposed to the flange; said extension defining a shaft of the hydraulic engine comprising an internal housing receiving one of the output shafts of the differential; the output shaft being coupled in rotation with the shaft of the hydraulic engine.

6. The hydraulic module according to the preceding claim, **characterized in that** each shaft of the hydraulic engine comprises a first shoulder defining a first cylindrical seat on which there is mounted a bearing (5) permitting the shaft of the hydraulic engine to be rotatably supported in the casing of the hydraulic module.

7. The hydraulic module according to the preceding claim, **characterized in that** the wall on which the cylinder and the valve plate are arranged in a flat manner is inclined with respect to the plane of the plates by a defined angle not equal to zero.

8. The hydraulic module according to the preceding claim, **characterized in that** each shaft of the hydraulic engine comprises a second shoulder defining a second cylindrical seat, adjacent to the first, **in that** a homokinetic joint (13) is mounted on the second cylindrical seat rotatably supporting the cylinder and the valve plate.

9. A hybrid hydraulic vehicle comprising a compact hydraulic module according to one of the preceding claims.

10. The hybrid hydraulic vehicle according to the preceding claim, **characterized in that** the vehicle is a series hybrid vehicle.
